# EUROPÄISCHE PATENTSCHRIFT

(11) **EP 0 749 859 B1**
(45) Veröffentlichungstag und Bekanntmachung des Hinweises auf die Patenterteilung: **22.03.2000**
(21) Anmeldenummer: 96108382.1
(22) Anmeldetag: 25.05.1996
(51) Int. Cl.: B60J 7/12

(54) **Faltverdeck für ein Cabriolet-Fahrzeug**
Softtop for convertible vehicle
Capote pliante pour véhicule convertible

(30) Priorität: 22.06.1995 DE 29510117 U; 22.06.1995 DE 29510118 U
(43) Veröffentlichungstag der Anmeldung: 27.12.1996
(73) Patentinhaber: Wilhelm Karmann GmbH, D-49084 Osnabrück (DE)
(72) Erfinder: Rothe, Karl, 49565 Bramsche (DE); Maass, Joachim, 49143 Bissendorf (DE)
(74) Vertreter: Busse & Busse Patentanwälte

(56) Entgegenhaltungen:
- DE-A- 3 914 638
- DE-U- 9 000 577
- GB-A- 550 634

## Beschreibung

Die Erfindung betrifft ein Faltverdeck für eine Cabriolet-Fahrzeug nach dem Oberbegriff des Anspruchs 1.

Bei einem bekannten Faltverdeck für ein Cabriolet-Fahrzeug gemäß DE-U 90 00 577.5 ist die Dachhaut zwischen paarweise gegenüberliegenden Gestängenschenkeln eines im Bereich des Windschutzscheibenrahmens festlegbaren Klappgestänges aufgenommen. Die beidseits der Fahrzeuglängsachse angeordneten Gestängeschenkel weisen jeweils im Fahrzeugheckbereich einen karosserieseitig abgestützten Hauptantrieb auf und der heckseitige Dachhautbereich ist mit diesen randseitig untergreifenden, aus schwenkbeweglich verbundenen Sturmstangenteilen bestehenden Sturmstangen versehen. Diesen Sturmstangen ist ein deren Teile in unterschiedliche Schwenkstellungen bewegendes Antriebsorgan zugeordnet. Das Antriebsorgan ist einenends karosserieseitig abgestützt und anderenends mit einer Spanngestängeeinheit verbunden, die einerseits schwenkbeweglich im Bereich der Fahrzeugkarosserie abgestützt und andererseits mit einem der Sturmstangenteile gekoppelt ist.

Der Erfindung liegt die Aufgabe zugrunde, ein Faltverdeck für ein Cabriolet-Fahrzeug zu schaffen, dessen Sturmstangen mit konstruktiv einfachen und kleinbauenden Teilen einen geringeren Raumbedarf aufweisen und bei gefährdungsfreier Anordnung des Antriebsorgans mit hinreichender Kopffreiheit im Fondbereich eine Verbesserung der automatischen Verdecksteuerung ermöglichen.

Ausgehend von einem Cabriolet-Fahrzeug nach dem Oberbegriff des Anspruchs 1 löst die Erfindung die Aufgabe mit den Merkmalen des kennzeichnenden Teils des Anspruchs 1. Hinsichtlich wesentlicher weiterer Ausgestaltungen wird auf die Ansprüche 2 bis 11 verwiesen.

Das erfindungsgemäß ausgestaltete Faltverdeck weist eine mit dem karosserieseitig abgestützten Antriebsorgan bewegliche Spanngestängeeinheit auf, deren Steuerkonstruktion eine automatische Betätigung der Sturmstangen und deren Festlegung in einer Übertotpunktstellung ermöglicht. Dabei ist über den an das Antriebsorgan angekoppelten Schwinghebel und den Spannhebel eine mit geringem konstruktiven Aufwand verbundene Wirkverbindung geschaffen, mit der eine raumsparende Positionierung des insbesondere als Hydraulikzylinder ausgebildeten Antriebsorgans im hinteren unteren Heckbereich des Fahrzeugs möglich ist.

Gleichzeitig können mit geringem technischen Aufwand Antriebsbauteile, insbesondere die durch einen hohen Innendruck ein Gefährdungspotential darstellenden Zuführleitungen der Hydraulikzylinder, so in die Fahrzeugkarosserie integriert werden, daß auch im Falle eines Defekts im Leitungsbereich der Fondbereich des Fahrzeugs weitgehend unbeeinträchtigt ist und Gefährdungen der Insassen ausgeschlossen sind.

Über eine konstruktive Anordnung der jeweiligen Anlenkpunkte der Spanngestängeeinheit im Bereich des Schwenkhebels und des Spannhebels ist mit geringem Aufwand eine von Hand betätigbare Notbedienung für das automatische Faltverdeck geschaffen, so daß beispielsweise auch bei einem Ausfall des Hydraulikantriebs eine Positionierung des Faltverdeckes und eine ungehinderte Fahrzeugbenutzung möglich ist.

In einer zweiten Ausführungsform weist das Faltverdeck eine Steuerkonstruktion mit einem Winkelhebel und einem Spannhebel auf. Dabei ist über den einerseits an das Antriebsglied des karosserieseitig abgestützten Antriebsorgans angekoppelten Winkelhebel und andererseits an dessen zweiten Schenkel angreifenden Spannhebel für die Sturmstangen die kompakte Wirkverbindung der Bauteile geschaffen.

Mit den Steuerbewegungen des Winkelhebels können die Sturmstangenteile sowohl bei der Öffnungs- als auch bei der Schließbewegung des Faltverdecks vorteilhaft auf einer nur geringe mechanische Belastungen der Dachhaut verursachenden Bewegungsbahn derart verschwenkt werden, daß außerdem der Fondbereich weitgehend frei bleibt, die Bauteile des Faltverdecks oberhalb eines Fond-Passagieres keine Beeinflussung der Kopffreiheit verursachen und damit eine Öffnungs- und Schließbewegung des Faltverdecks auch bei besetztem Fahrzeug denkbar ist.

In der Schließstellung ist im Verbindungsgelenk von Winkelhebel und Spannhebel ein Totpunkt gebildet, mit dessen Stützwirkung gleichzeitig das Faltverdeck im Heckbereich eine verbesserte Sicherheit gegen Diebstahl oder dgl. ungewolltes Eindringen in den Innenraum des Fahrzeugs aufweist.

Hinsichtlich wesentlicher weiterer Vorteile und Einzelheiten der Erfindung wird auf die nachfolgende Beschreibung und die Zeichnung verwiesen, in der ein Ausführungsbeispiel des Faltverdecks gemäß der Erfindung schematisch näher veranschaulicht ist. In der Zeichnung zeigen:
- Fig. 1: eine Prinzipdarstellung eines Faltverdecks für ein Cabriolet-Fahrzeug in einer Seitenansicht in Schließstellung,
- Fig. 2 bis 4: jeweilige Prinzipdarstellungen ähnlich Fig. 1 mit dem Faltverdeck in unterschiedlichen Faltstellungen,
- Fig. 5: eine perspektive Rückansicht eines Faltverdecks für ein Cabriolet-Fahrzeug mit teilweise in Explosivdarstellung veranschaulichten Gestängeteilen in einer zweiten Ausführungsform,
- Fig. 6: eine Seitenansicht des Faltverdecks gemäß Fig. 5,
- Fig. 7: eine Seitenansicht ähnlich Fig. 5 mit dem Faltverdeck in einer ersten Öffnungsphase, und
- Fig. 8: eine Seitenansicht ähnlich Fig. 6 mit dem in einen Verdeckkasten abgelegten Faltverdeck.

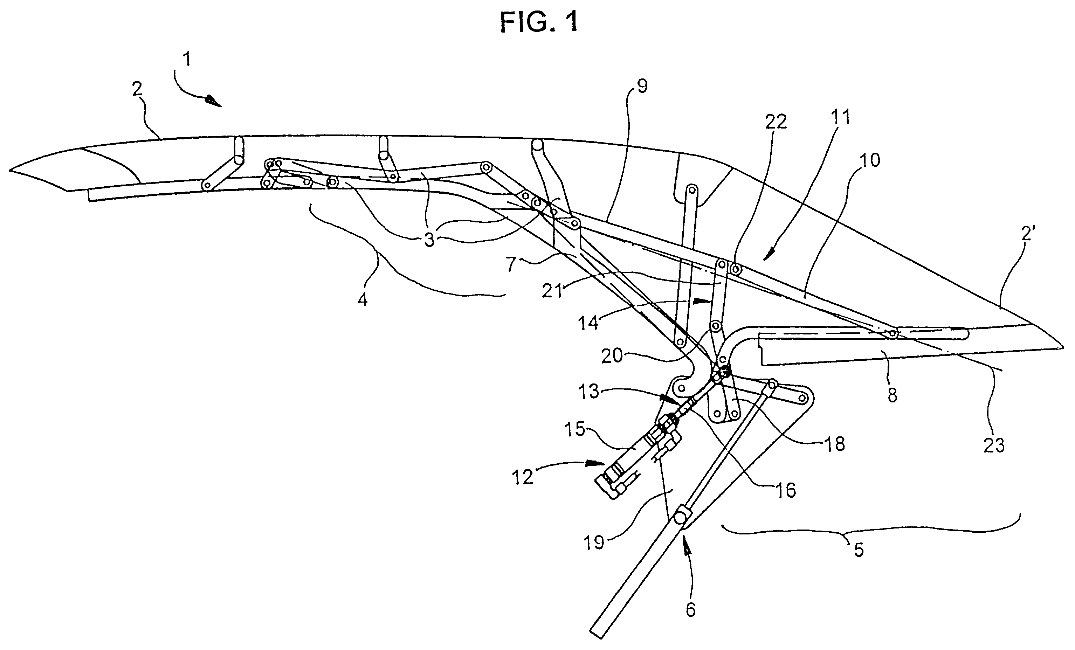

In Fig. 1 ist ein insgesamt mit 1 bezeichnetes Faltverdeck für ein Cabriolet-Fahrzeug dargestellt, wobei in dieser Seitenansicht entsprechende symmetrisch der Fahrzeuglängsachse angeordnete und den Gesamtaufbau des Faltverdecks 1 kennzeichnende Bauteile nicht sichtbar sind.

Das Fahrzeug 1 ist mit einer Dachhaut 2 versehen, die zwischen gegenüberliegenden Gestängeschenkeln 3 eines im Bereich des vorderen Windschutzscheibenrahmens (nicht dargestellt) festlegbaren Klappgestänges 4 aufgenommen ist. Das Klappgestänge 4 weist einen im Fahrzeugheckbereich 5 karosserieseitig abgestützten Hauptantrieb 6 auf, wobei der heckseitige Dachhautbereich 2' mit diesen randseitig untergreifenden, aus schwenkbeweglich verbundenen Sturmstangenteilen 9, 10 bestehenden Sturmstangen 11 versehen ist. Bei der gemäß DE 39 14 638 A1 vorgeschlagenen Ausführung eines Faltverdecks ist unmittelbar zwischen den Sturmstangenteilen 9, 10 eine diese in unterschiedliche Schwenkstellungen bewegendes Antriebsorgan vorgesehen.

Das erfindungsgemäß ausgebildete Faltverdeck 1 ist mit Sturmstangen 11 versehen, die jeweils mit einem karosserieseitig abgestützten Antriebsorgan 12 ausgebildet sind, wobei dessen Antriebsglied 13 mit einer einerseits schwenkbeweglich im Bereich der Fahrzeugkarosserie abgestützten und andererseits mit einem der beiden Sturmstangenteile 9, 10 gekoppelten Spanngestängeeinheit 14 verbunden ist. Der hintere Sturmstangenteil 10 ist dabei am Spannbügel 8 im Bereich der hinteren Dachhaut 2' abgestützt und der vordere Sturmstangenteil 9 mit dem Klappgestänge 4 so verbunden, daß die Spanngestängeeinheit 14 und die Sturmstangenteile 9, 10 unabhängig vom Hauptantrieb 6 bewegbar sind.

In zweckmäßiger Ausführung ist das Antriebsorgan 12 von einem hydraulischen Antriebszylinder 15 gebildet, dessen Arbeitskolben 16 mit der Spanngestängeeinheit 14 im Bereich eines Schwinghebels 18 verbunden ist.

Die Antriebsbewegung des Antriebszylinders 15 wird bei dieser mehrteiligen Spanngestängeeinheit 14 dadurch auf die Sturmstangenteile 9, 10 übertragen, daß der Arbeitskolben 16 im wesentlichen mittig an dem Schwinghebel 18 der Spanngestängeeinheit 14 angreift und der im Bereich des Verdeckhauptlagers 19 schwenkbeweglich abgestützte Schwinghebel 18 im Bereich eines Kniegelenkes 20 mit einem Spannhebel 21 derart verbunden ist, daß mit diesem die Sturmstange 11 entsprechend der Bewegung des Antriebskolbens 16 zur Dachhaut 2' hin bzw. von dieser weg bewegt werden kann.

Ebenso ist in einer weiteren Ausführungsform (nicht dargestellt) denkbar, daß das Antriebsglied 13 des Antriebszylinders 12 am zum Spannhebel 21 abgewandten Ende des Schwinghebels 18 angreift und dieser seinerseits im Bereich eines im wesentlichen mittig angeordneten Schwenklagers am Verdeckhauptlager 19 abgestützt ist.

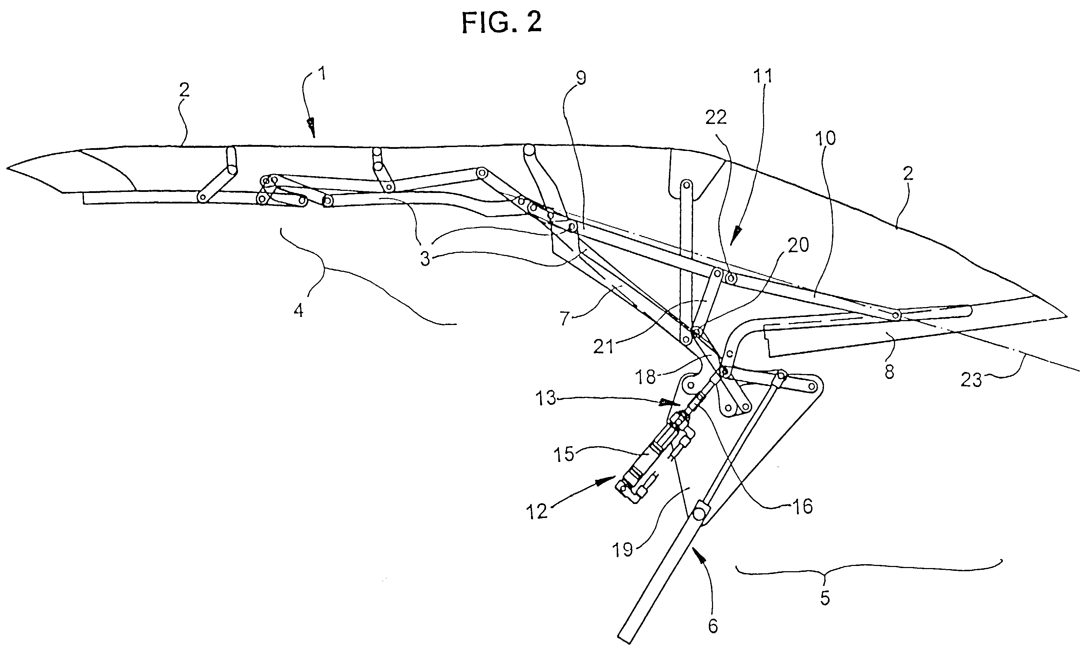

Der Schwinghebel 18 und der Spannhebel 21 der Gestängeeinheit 14 sind dabei vorteilhaft derart bemessen, daß in der Schließstellung des Faltverdecks (Fig. 1) die Sturmstangenteile 9, 10 im Bereich ihres gemeinsamen Verbindungsgelenkes 22 eine Übertotpunkt-Stellung aufweisen. Diese Übertotpunkt-Stellung wird durch eine strichpunktierte Linie 23 in Fig. 1 und Fig. 2 deutlich, wobei in der Bewegungsphase gemäß Fig. 2 die Spanngestängeeinheit 14 das Verbindungsgelenk 22 bereits in einen Bereich unterhalb der Linie 22 verschwenkt und damit die Dachhaut 2 entspannt ist.

In der dargestellten Ausführungsform des Faltverdecks 1 gemäß Fig. 1 ist außerdem verdeutlicht, daß das Antriebsorgan 12 bzw. der Antriebszylinder 15 der Spanngestängeeinheit 14 in zweckmäßiger Ausbildung in einer zum Klappgestänge 4 hin gerichteten und im wesentlichen parallel zum Hauptantrieb 6 des Klappgestänges 4 verlaufenden Einbaulage angeordnet ist.

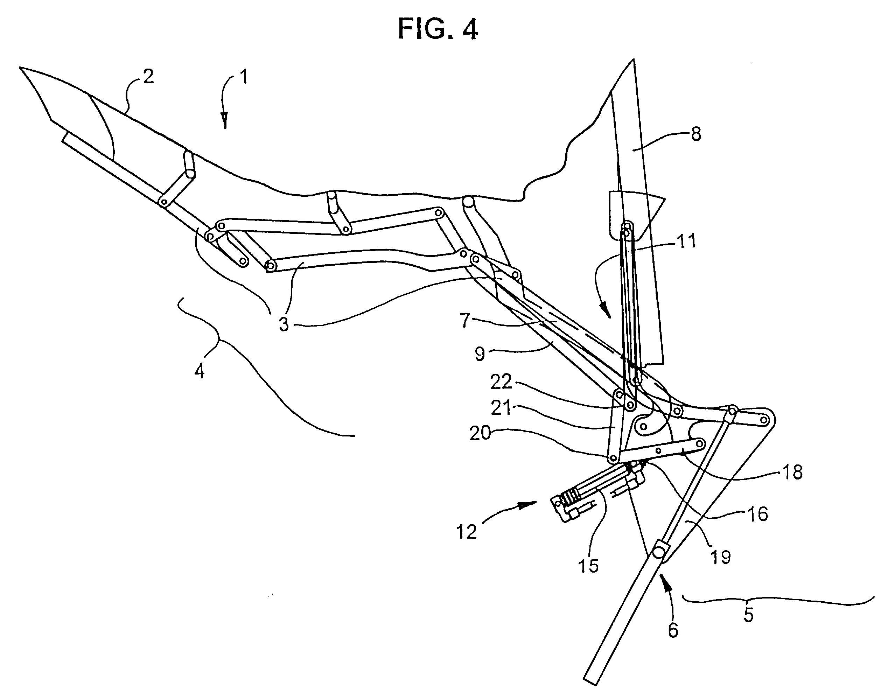

Damit ist über die Bauteile der Spanngestängeeinheit 14 insgesamt eine gleichmäßige Bewegungseinleitung auf die Sturmstange 11 so möglich, daß beispielsweise bei Ausführung einer Öffnungsbewegung entsprechend den Bewegungsphasen in Fig. 2 und Fig. 4 mit geringem Raumbedarf eine Entspannung des Faltverdecks 1 vor dessen Rückschwenkung in den Heckbereich 5 des Fahrzeuges erreicht ist.

Die Spanngestängeeinheit 14 mit dem Antriebsorgan 12 ist in zweckmäßiger Ausführung über das Sturmstangenteil 10 so mit dem Spannbügel 8 der Dachhaut 2' verbunden, daß das Antriebsorgan 12 in einer mit geringem Aufwand über eine Steuereinrichtung (nicht dargestellt) regelbaren Doppelfunktion auch die Bewegung des Spannbügels 8 steuern kann, damit der Hauptantrieb 6 entlastet ist und zusätzliche Verbindungsbauteile entbehrlich sind.

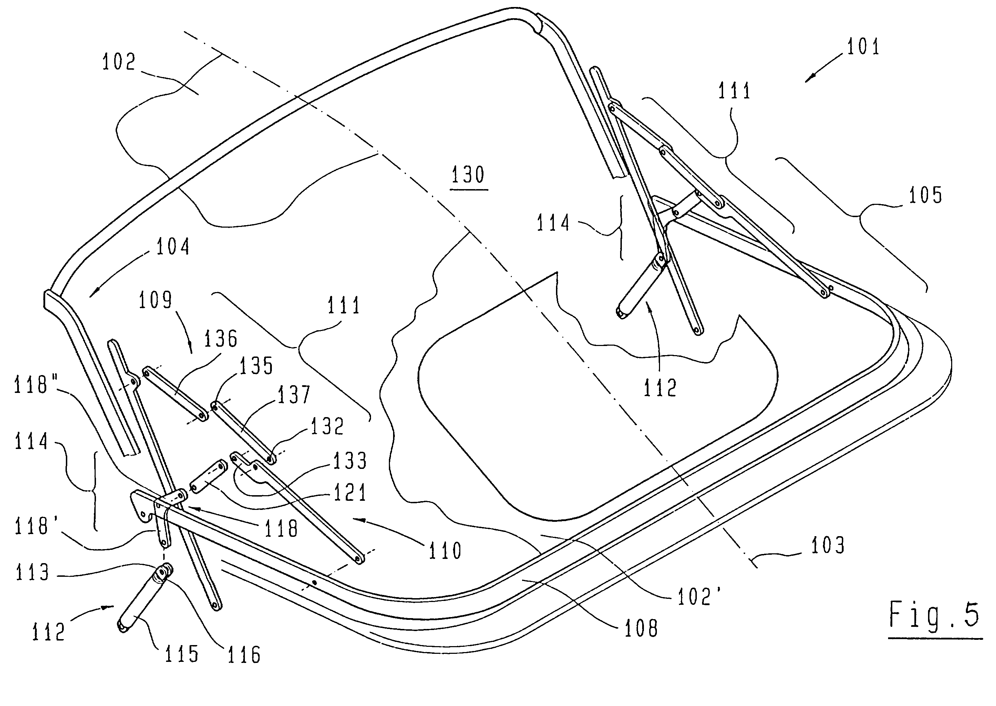

In Fig. 5 ist ein insgesamt mit 101 bezeichnetes Faltverdeck für ein Cabriolet-Fahrzeug in einer zweiten Ausführungsform dargestellt, wobei in dieser perspektivischen Rückansicht entsprechende symmetrisch der Fahrzeuglängsachse 103 angeordnete und den Gesamtaufbau des Faltverdecks 101 kennzeichnende Bauteile auf der linken Seite in einer Explosivdarstellung und auf der rechten Seite in Montagestellung sichtbar sind.

Das Faltverdeck 101 ist mit einer Dachhaut 102 versehen, die zwischen gegenüberliegenden Gestängeschenkeln eines im Bereich des vorderen Windschutzscheibenrahmens (nicht dargestellt) festlegbaren Klappgestänges 104 aufgenommen ist. Das Klappgestänge 104 weist einen im Fahrzeugheckbereich 105 karosserieseitig abgestützten Hauptantrieb 106 auf, wobei der heckseitige Dachhautbereich 102' mit diesen randseitig untergreifenden, aus schwenkbeweglich verbundenen Sturmstangenteilen 109, 110 bestehenden Sturmstangen 111 versehen ist.

Das erfindungsgemäß ausgebildete Faltverdeck 101 ist mit Sturmstangen 111 versehen, die jeweils mit einem karosserieseitig abgestützten Antriebsorgan 112 versehen sind, wobei dessen Antriebsglied 113 mit einer einerseits schwenkbeweglich im Bereich der Fahrzeugkarosserie abgestützten und andererseits mit einem der beiden Sturmstangenteile 109, 110 gekoppelten Spanngestängeeinheit 114 verbunden ist. Der hintere Sturmstangenteil 110 ist dabei am Spannbügel 108 im Bereich der hinteren Dachhaut 102' abgestützt und der vordere Sturmstangenteil 109 mit dem Klappgestänge 104 so verbunden, daß die Spanngestängeeinheit 114 und die Sturmstangenteile 109, 110 unabhängig vom Hauptantrieb 106 bewegbar sind.

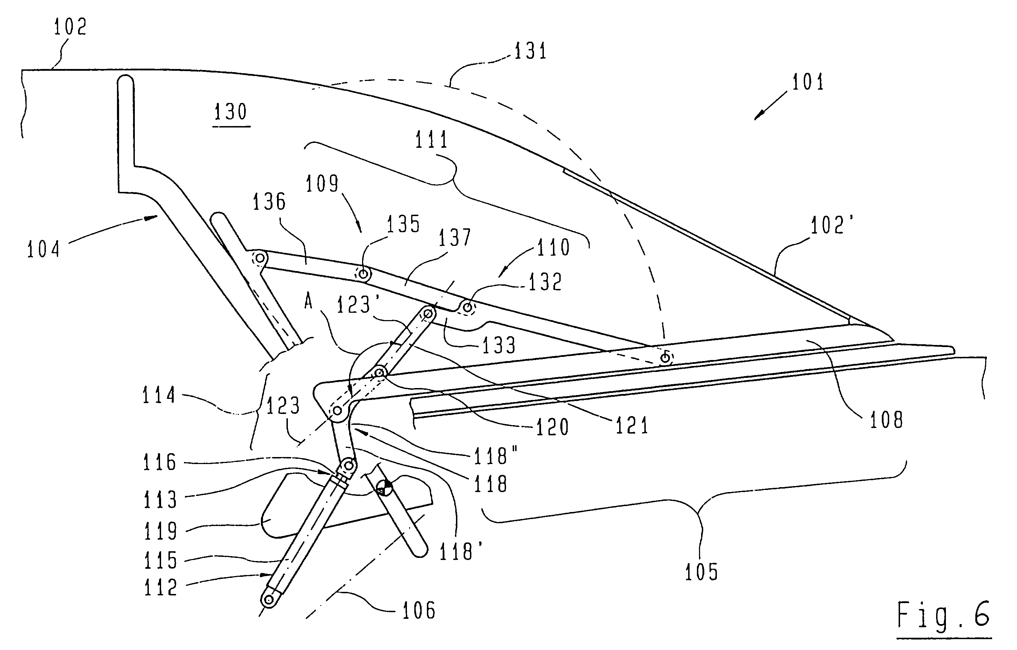

In zweckmäßiger Ausführung ist das Antriebsorgan 112 von einem hydraulischen Antriebszylinder 115 gebildet, dessen Arbeitskolben 116 mit der Spanngestängeeinheit 114 im Bereich eines Winkelhebels 118 verbunden ist (Fig. 6).

Die Antriebsbewegung des Antriebszylinders 115 wird bei dieser mehrteiligen Spanngestängeeinheit 114 dadurch auf die Sturmstangenteile 109, 110 übertragen, daß der Arbeitskolben 116 an einem Schenkel 118' eines Winkelhebel 118 angreift, dieser in seinem mittleren Bereich am Verdeckhauptlager 119 schwenkbeweglich abgestützt ist und ein zweiter Schenkel 118" im Bereich eines Kniegelenkes 120 mit einem Spannhebel 121 derart verbunden ist, daß mit diesem die Sturmstange 111 entsprechend der Bewegung des Anbtriebskolbens 116 zur Dachhaut 102' hin bzw. von dieser weg bewegt werden kann.

Der Winkelhebel 118 bzw. dessen Schenkel 118', 118'' und der Spannhebel 121 der Gestängeeinheit 114 sind dabei vorteilhaft derart bemessen, daß in der Schließstellung des Faltverdecks 101 (Fig. 6) im Bereich des gemeinsamen Kniegelenkes 120 eine Totpunkt-Stellung gebildet ist. Diese Totpunkt-Stellung wird durch einen zwischen dem Schenkel 118' und dem Spannhebel 121 gebildeten Winkel A (strichpunktiert Linien 123, 123' in Fig. 6) verdeutlicht.

In der dargestellten Ausführungsform des Faltverdecks 101 gemäß Fig. 6 ist außerdem verdeutlicht, daß das Antriebsorgan 112 bzw. der Antriebszylinder 115 der Spanngestängeeinheit 114 in zweckmäßiger Ausbildung in einer zum Klappgestänge 104 hin gerichteten und im wesentlichen parallel zum Hauptantrieb 106 des Klappgestänges 104 verlaufenden Einbaulage angeordnet ist.

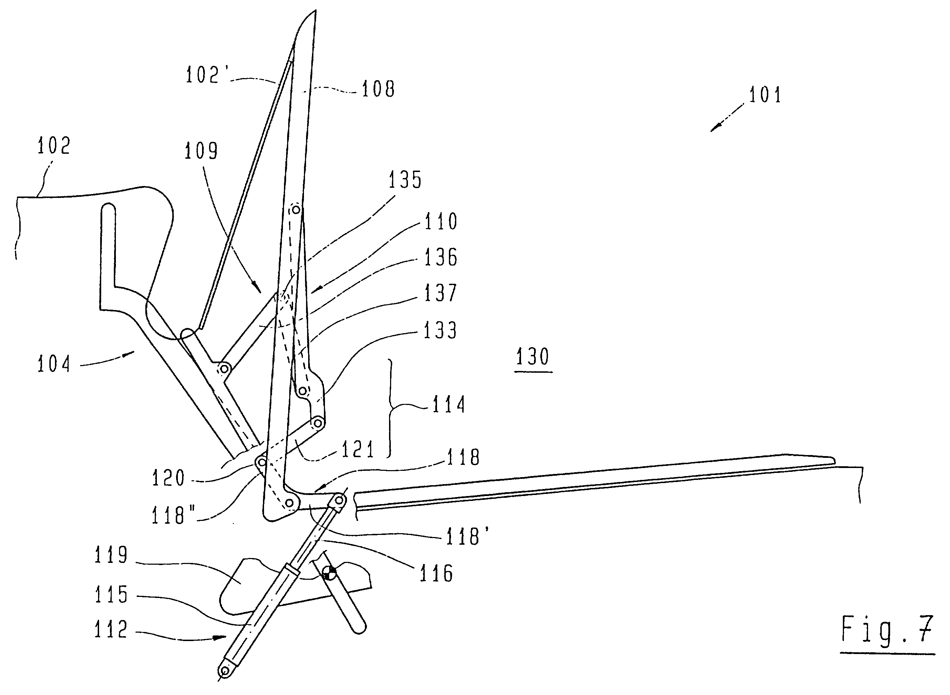

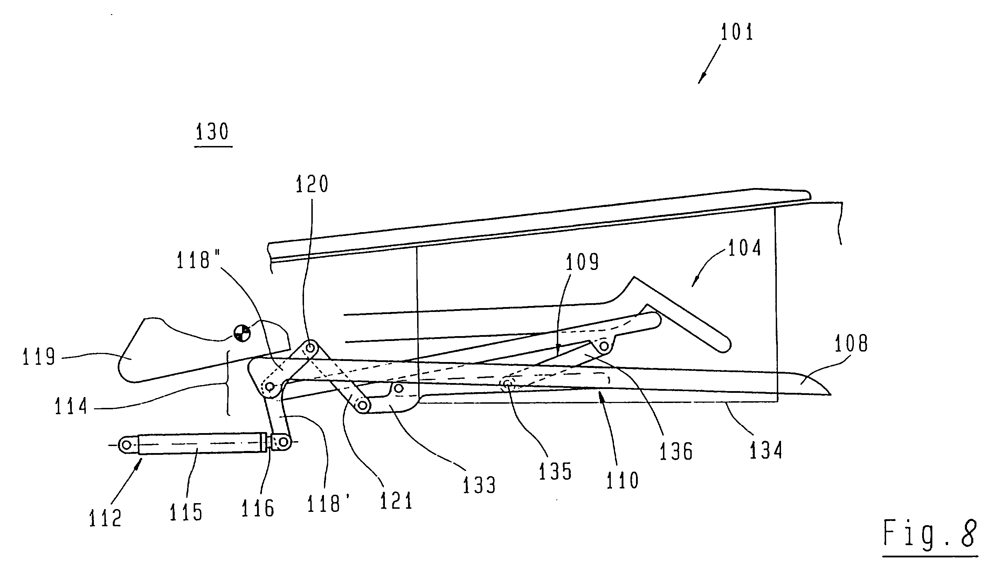

Damit ist über die Bauteile der Spanngestängeeinheit 114 insgesamt eine gleichmäßige Bewegungseinleitung auf die Sturmstange 111 so möglich, daß beispielsweise bei Ausführung einer Öffnungsbewegung entsprechend den Bewegungsphasen in Fig. 7 und Fig. 8 mit geringem Raumbedarf eine Entspannung des Faltverdecks 101 (Fig. 7) vor dessen Rückschwenkung in den Heckbereich 105 (Fig. 8) des Fahrzeuges erreicht ist.

Die vorbeschriebenen Bauteile der Spanngestängeeinheit 114 wirken vorteilhaft mit der Sturmstange 111 und dem Spannbügel 108 derart zusammen, daß dem Faltverdeck 101 eine im Fondbereich 130 als Kopffreiheit wirksame Bewegungsbahn 131 vermittelbar ist (Fig. 6).

Im Bereich der Sturmstange 111 ist der Spannhebel 121 nahe dem zwischen den beiden Sturmstangenteilen 109, 110 befindlichen Verbindungsgelenk 132 mit dem hinteren Sturmstangenteil 110 verbunden. Besonders vorteilhaft wird der Konturverlauf der Bewegungsbahn 131 dadurch beeinflußt, daß der hintere Sturmstangenteil 110 einen in Längsrichtung parallel verlaufenden und vorderseitig mit dem Spannhebel 121 verbundenen Formansatz 133 aufweist. In der Packlage des Faltverdecks 101 (Fig. 8) ist mit dem Formansatz 133 eine weitere Absenkung der Bauteile im Bereich des Verdeckkastens 134 erreicht.

Für die Bewegung des Faltverdecks 101 entsprechend der vorteilhaften Bewegungsbahn 131 ist der vordere Sturmstangenteil 109 mit zwei ein gemeinsames Gelenk 135 aufweisenden Faltschenkeln 136, 137 versehen, mit denen in der ersten Öffnungsphase (Fig. 7) eine stabile Abstützung des Faltverdecks 101 erreicht ist. Die Faltschenkel 136, 137 sind dabei im wesentlichen gleichlang ausgebildet und das zugehörige Gelenk 135 ist mittig angeordnet.

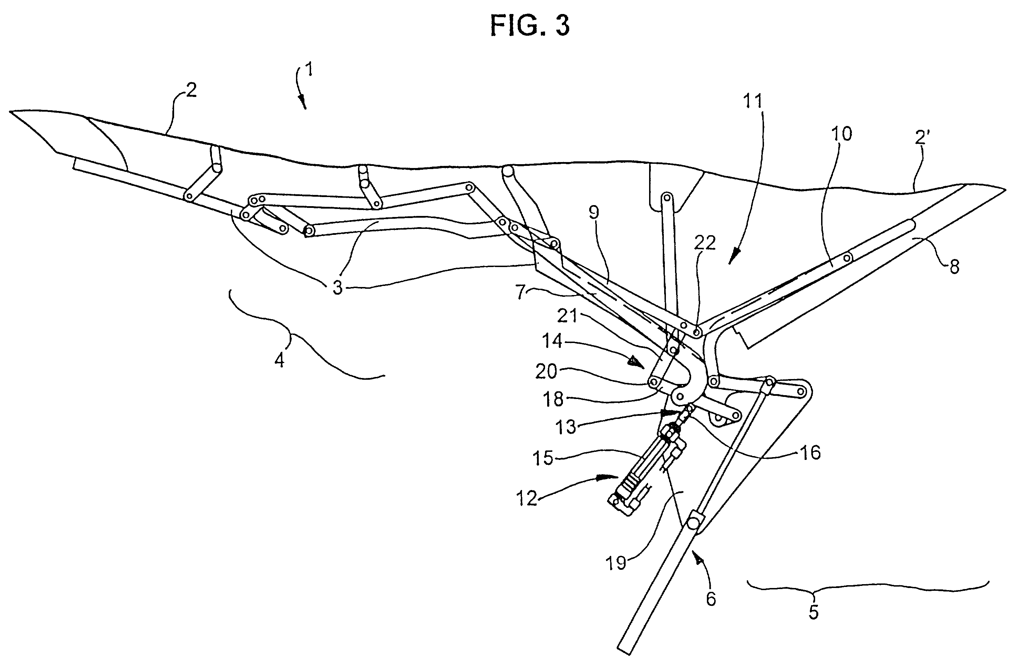

Für eine positionsgenaue Bewegung des Faltverdecks 101 in die im wesentlichen vertikale Öffnungsstellung gemäß Fig. 3 bzw. die Ablagestellung gemäß Fig. 8 sind im Bereich der Antriebsorgane 112 und/oder der Spanngestängeeinheit 114 jeweils als Mikroschalter ausgebildete Schaltelemente (nicht dargestellt) vorgesehen. In vorteilhafter Ausbildung kann der Winkelhebel 118 im Bereich eines seiner beiden Schenkel 118', 118'' auch mit einem mechanischen Anschlagteil (nicht dargestellt) versehen werden, über das die Spanngestängeeinheit 114 mit den Gestängeschenkeln des Klappgestänges 104 ohne zusätzliche Mikroschalter so zusammenwirkt, daß Überbelastungen von Gestängebauteilen bzw. Verklemmungen der Dachhaut 102 in jeder Bewegungsphase des Faltverdecks 101 mit hinreichender Sicherheit ausgeschlossen sind.

## Patentansprüche

1. Faltverdeck für ein Cabriolet-Fahrzeug, dessen Dachhaut (2; 2'; 102, 102') zwischen paarweise gegenüberliegenden Gestängeschenkeln (3) eines im Bereich des Windschutzscheibenrahmens festlegbaren Klappgestänges (4; 104) aufgenommen ist, wobei die beidseits der Fahrzeuglängsachse (103) angeordneten Gestängeschenkel (3) jeweils im Fahrzeugheckbereich (5; 105) einen karosserieseitig abgestützten Hauptantrieb (6; 106) aufweisen und der heckseitige Dachhautbereich (2'; 102') mit diesen randseitig untergreifenden, aus schwenkbeweglich verbundenen Sturmstangenteilen (9, 10; 109, 110) bestehenden Sturmstangen (11; 111) versehen ist und den Sturmstangen (11; 111) ein deren Teile (9, 10; 109, 110) in unterschiedliche Schwenkstellungen bewegendes Antriebsorgan (12; 112) zugeordnet ist, das einenends karosserieseitig abgestützt und anderenends mit einer Spanngestängeeinheit (14; 114) verbunden ist, die einerseits schwenkbeweglich im Bereich (19; 119) der Fahrzeugkarosserie abgestützt und andererseits mit einem der Sturmstangenteile (9, 10; 109, 110) gekoppelt ist, **dadurch gekennzeichnet,** daß das Antriebsorgan (12) im wesentlichen mittig an einem im Bereich des Verdeckhauptlagers (19) abgestützten Schwinghebel (18) angelenkt ist, dieser anderenends über ein Kniegelenk (20) an einem Spannhebel (21) angreift, der seinerseits nahe dem zwischen den beiden Sturmstangenteilen (9, 10) befindlichen Verbindungsgelenk (22) mit dem vorderen Sturmstangenteil (9) verbunden ist.

2. Faltverdeck nach Anspruch 1, dadurch gekennzeichnet, daß das Antriebsorgan (12; 112) von einem hydraulischen Arbeitszylinder (15; 115) gebildet ist.

3. Faltverdeck nach Anspruch 1 oder 2, dadurch gekennzeichnet, daß das Antriebsorgan (12; 112) der Spanngestängeeinheit (14; 114) in einer zum Klappgestänge (4; 104) gerichteten und im wesentlichen parallel zum Hauptantrieb (6; 106) des Klappgestänges (4; 104) verlaufenden Einbaulage angeordnet ist.

4. Faltverdeck nach einem der Ansprüche 1 bis 3, dadurch gekennzeichnet, daß das Antriebsglied (13) des Antriebsorgans (12) an einem freien Ende des Schwinghebels (18) angreift und dieser seinerseits im Bereich eines im wesentlichen mittig angeordneten Schwenklagers abgestützt ist.

5. Faltverdeck nach einem der Ansprüche 1 bis 4, dadurch gekennzeichnet, daß der Schwinghebel (18) und der Spannhebel (21) der Spanngestängeeinheit (14) derart bemessen sind, daß in der Schließstellung des Faltverdecks (1) die Sturmstangenteile (9, 10) im Bereich ihres gemeinsamen Verbindungsgelenkes (22) eine Übertotpunkt-Stellung aufweisen.

6. Faltverdeck nach einem der Ansprüche 1 bis 3, mit einer einen Winkelhebel (118) aufweisenden Spanngestängeeinheit (114), dadurch gekennzeichnet, daß der Winkelhebel (118) einen mit dem Antriebsorgan (112) verbundenen ersten Schenkel (118') und einem über einen Spannhebel (121) am hinteren Sturmstangenteil (110) angreifenden zweiten Schenkel (118') aufweist, der Spannhebel (121) nahe dem zwischen den beiden Sturmstangenteilen (109, 110) befindlichen Verbindungsgelenk (132) mit dem hinteren Sturmstangenteil (110) verbunden ist und der hintere Sturmstangenteil (110) einen in Längseinrichtung parallel verlaufenden und vorderseitig mit dem Spannhebel (121) verbundenen Formansatz (133) aufweist.

7. Faltverdeck nach Anspruch 6, dadurch gekennzeichnet, daß der vordere Sturmstangenteil (109) von zwei ein gemeinsames Gelenk (135) aufweisenden Faltschenkeln (136, 137) gebildet ist.

8. Faltverdeck nach Anspruch 6 oder 7, dadurch gekennzeichnet, daß die Faltschenkel (136, 137) im wesentlichen gleichlang sind und das Gelenk (135) mittig angeordnet ist.

9. Faltverdeck nach einem der Ansprüche 6 bis 8, dadurch gekennzeichnet, daß der Winkelhebel (118) über ein Anschlagteil mit den Gestängeschenkeln des Klappgestänges (104) zusammenwirkt.

10. Faltverdeck nach einem der Ansprüche 6 bis 9, dadurch gekennzeichnet, daß der Spannhebel (121) und der zweite Schenkel (118") des Winkelhebels (118) derart bemessen sind, daß deren gemeinsames Verbindungsgelenk (120) in der Schließstellung des Faltverdecks (101) eine Totpunkt-Stellung aufweist.

11. Faltverdeck nach einem der Ansprüche 6 bis 10, dadurch gekennzeichnet, daß die Bauteile der Spanngestängeeinheit (114) derart der Sturmstange (111) und dem Spannbügel (108) zusammenwirken, daß dem Faltverdeck (101) eine im Fondbereich (130) als Kopffreiheit wirksame Bewegungsbahn (131) vermittelbar ist.

## Claims

1. A folding top for a cabriolet vehicle of which the roof skin (2, 2'; 102, 102') is accommodated between pairwisely oppositely disposed linkage arms (3) of a folding linkage (4; 104) which is adapted to be fixed in the region of the windscreen frame whereby the linkage arms (3) disposed on both sides of the longitudinal axis (103) of the vehicle respectively have in the rear part (5; 105) of the vehicle a main drive (6;106) which is supported on the bodywork side while the rear roof skin area (2'; 102') is provided with storm rods (11; 111) consisting of pivotally connected storm rod parts (9, 10; 109, 110) and of which storm rods (11; 111) are associated with a drive means (12; 112) which moves one of their parts (9, 10; 109, 110) in differing pivoting positions and which is on the one hand braced on the bodywork side while being at the other end connected to a tensioning linkage (14; 114) which is on the one hand supported for pivoting movement in the region (19; 119) of the vehicle bodywork while being on the other hand coupled to one of the storm rod parts (9, 10; 109, 110), characterised in that the drive member (12) is substantially centrally articulated on an oscillating lever (18) supported in the region of the main bearing (19) of the folding top, while, via a knee joint (20), the other end of the oscillating lever (18) engages a tensioning arm which is in turn connected to the front storm rod part (9) close to the connecting joint (22) which is disposed between the two storm rod parts (9, 10).

2. A folding top according to claim 1, characterised in that the drive member (12; 112) is an hydraulic working cylinder (15; 115).

3. A folding top according to claim 1 or 2, characterised in that the drive member (12; 112) of the tensioning linkage unit (14; 114) is disposed in a position which is directed towards the folding linkage (4; 104) and extending substantially parallel with the main drive (6; 106) of the folding linkage (4; 104).

4. A folding top according to one of claims 1 to 3, characterised in that the drive element (13) of the drive member (12) engages a free end of the oscillating lever (18) which, for its part, is supported in the region of a substantially centrally disposed pivot bearing.

5. A folding top according to one of claims 1 to 4, characterised in that the oscillating lever (18) and the tensioning arm (21) of the tensioning linkage unit (14) are so dimensioned that, in the closed position of the folding top (1), the storm rod part (9, 10) have an over-dead centre position in the region of their common connecting joint (22).

6. A folding top according to one of claims 1 to 3, with a tensioning linkage unit (114) comprising an angle lever (118), characterised in that the angle lever (118) has, connected to the driving member (112), a first arm (118') and a second arm (118") which, via a clamping lever (121), engages the rear storm rod part (110), the tensioning arm (121) is connected to the rear storm rod part (110) near the connecting joint (132) disposed between the two storm rod parts (109, 110), and in that the rear storm rod part (110) has a shaped projection (133) extending parallel in a longitudinal direction and connected at the front to the tensioning arm (121).

7. A folding top according to claim 6, characterised in that the front storm rod part (109) consists of two folding arms (136, 137) which have a common joint (135).

8. A folding top according to claim 6 or 7, characterised in that the folding arms (136, 137) are of substantially equal length and in that the joint (135)is centrally disposed.

9. A folding top according to one of claims 6 to 8, characterised in that the angle lever (118) co-operates via an abutment part with the linkage arms of the folding linkage (104).

10. A folding top according to one of claims 6 to 9, characterised in that the tensioning arm (121) and the second arm (118") of the angle lever (118) are so dimensioned that their common connecting joint has a dead centre position when the folding top (101) is in its closed position.

11. A folding top according to one of claims 6 to 10, characterised in that the component parts of the tensioning linkage unit (114) so co-operate with the storm rod (111) and the tensioning frame member (108) that in the back area (130) of the folding top (101), a movement path (131) can be imparted to the folding top (101) which effectively becomes head room.

## Revendications

1. Capote pliante pour un cabriolet, dans laquelle :
- la couverture de toit (2, 2' ; 102, 102') est montée sur des branches de tringlerie (3) se faisant face deux par deux, d'une armature pliante (4 ;104) qui peut être fixée dans la zone du cadre du pare-brise,
- les branches de tringlerie (3) situées respectivement d'un côté et de l'autre de l'axe longitudinal du véhicule, présentent, dans la partie arrière (5 ; 105) du véhicule, un entraînement principal (6 ; 106) en appui sur la carrosserie,
- la partie de la couverture de toit (2' ; 102') située vers l'arrière est équipée de tringles de contreventement (11 ; 111) en prise par dessous avec la partie (2' ; 102') le long de son bord, et composées de parties de tringle (9, 10 ; 109, 110) pouvant basculer l'une sur l'autre,
- aux tringles de contreventement (11 ; 111) est associé un appareil d'entraînement (12 ; 112) amenant les parties (9, 10 ; 109, 110) de ces tringles dans diverses positions de basculement, l'appareil (12 ; 112) étant par une extrémité en appui sur la carrosserie et, par son autre extrémité, en liaison avec un ensemble de tringles de tension (14 ; 114) qui lui-même est d'un côté en appui, avec possibilité de basculement, dans la zone (19 ; 119) de la carrosserie tandis que de l'autre côté, il est accouplé à une des parties de tringle de contreventement (9, 10 ; 109, 110),
caractérisée en ce que
l'appareil d'entraînement (12) est articulé à peu près au milieu d'un levier basculant (18) monté en appui dans la zone du palier principal (19) de la capote, le levier (18) étant en prise, à son autre extrémité, par une articulation à genouillère, avec un levier de tension (21) qui, de son côté, est relié à la partie avant (9) de la tringle de contreventement, près de l'articulation (22) reliant les deux parties (9, 10).

2. Capote pliante selon la revendication 1,
caractérisée en ce que
l'appareil d'entraînement (12 ; 112) est un vérin hydraulique (15 ; 115).

3. Capote pliante selon la revendication 1 ou 2,
caractérisée en ce que
l'appareil d'entraînement (12 ; 112) de l'ensemble des tringles de tension (14 ; 114), dans sa position de montage, est dirigé vers l'armature pliante (4 ; 104) et disposé à peu près parallèlement à l'entraînement principal (6 ; 106) de l'armature pliante (4 ; 104).

4. Capote pliante selon une des revendications 1 à 3,
caractérisée en ce que
l'organe d'entraînement (13) de l'appareil (12) est en prise avec une extrémité libre du levier basculant (18) qui de son côté s'appuie sur un palier basculant monté vers son milieu.

5. Capote pliante selon l'une des revendications 1 à 4,
caractérisée en ce que
le levier basculant (18) et le levier de tension (21) de l'ensemble des tringles de tension (14) sont dimensionnés de manière que les parties (9, 10) de la tringle de contreventement, quand la capote est fermée, occupent une position de dépassement du point mort au niveau de leur articulation de liaison (22).

6. Capote pliante selon une des revendications 1 à 3, comportant un ensemble de tringles de tension (114) comprenant un levier à angle (118),
caractérisée en ce que
- le levier à angle (118) a une première branche (118') reliée à l'appareil d'entraînement (112) et une seconde branche (118") en prise par l'intermédiaire d'un levier de tension (121) avec la partie arrière (110) de la tringle de contreventement,
- le levier de tension (121) est relié à la partie arrière (110) de la tringle de contreventement, près de l'articulation (132) reliant les deux parties (109, 110) de la tringle de contreventement,
- la partie arrière (110) présente vers l'avant un appendice (133) parallèle à son axe longitudinal et relié au levier de tension (121).

7. Capote pliante selon la revendication 6,
caractérisée en ce que
la partie avant (109) de la tringle de contreventement est faite de deux branches pliantes (136, 137) reliées par une articulation (135).

8. Capote pliante selon les revendications 6 ou 7,
caractérisée en ce que
les branches pliantes (136, 137) sont sensiblement de longueurs égales et l'articulation (135) est montée au milieu de l'ensemble.

9. Capote pliante selon l'une des revendications 6 à 8,
caractérisée en ce que
le levier à angle (118) coopère par une partie de butée avec les branches de la tringle de l'armature pliante (104).

10. Capote pliante selon l'une des revendications 6 à 9,
caractérisée en ce que
le levier de tension (121) et la seconde branche (118") du levier à angle (118) sont dimensionnés de manière que l'articulation (120) qui les relie est en position de point mort quand la capote (101) est fermée.

11. Capote pliante selon l'une des revendications 6 à 10,
caractérisée en ce que
les composants de l'ensemble des tringles de tension (114) coopèrent avec la tringle de contreventement (111) et l'étrier de tension (108) de manière à donner à la capote (101) quand elle se déplace, une trajectoire (131) respectant la liberté de mouvement des têtes des passagers situés à la partie arrière (130) du véhicule.
